# EUROPÄISCHE PATENTSCHRIFT

(11) **EP 0 755 822 B1**
(45) Veröffentlichungstag und Bekanntmachung des Hinweises auf die Patenterteilung: **13.01.1999**
(21) Anmeldenummer: 96111420.4
(22) Anmeldetag: 16.07.1996
(51) Int. Cl.: B60K 37/02

(54) **Anzeigevorrichtung für Funktionen und Betriebszustände eines Kraftfahrzeuges**
Display device for functions and operating states of a motor vehicle
Dispositif d'affichage pour des fonctions et des états de fonctionnement d'une automobile

(30) Priorität: 25.07.1995 DE 29511962 U
(43) Veröffentlichungstag der Anmeldung: 29.01.1997
(73) Patentinhaber: Mannesmann VDO AG, 60326 Frankfurt (DE)
(72) Erfinder: Spormann, Horst, 78050 Villingen-Schwenningen (DE)

(56) Entgegenhaltungen:
- EP-A- 0 064 865
- EP-A- 0 505 221
- EP-A- 0 636 514
- DE-U- 9 108 898

## Beschreibung

Die Erfindung betrifft eine Anzeigevorrichtung für Funktionen und Betriebszustände eines Kraftfahrzeuges mit den anzuzeigenden Funktionen und Betriebszuständen zugeordneten Lampen.

Bei der herkömmlichen Armaturenbrettgestaltung sind die für die Anzeige von Funktionen und Betriebszuständen eines Kraftfahrzeuges vorgeschriebenen und somit zwingend erforderlichen oder als zweckmäßig erachteten Anzeigelemente in der Regel nach dem Gutdünken des Fahrzeug- bzw. des Armaturenbrettherstellers angeordnet. Dies hat zur Folge, daß die Anzeigeelemente üblicherweise "verstreut" angeordnet sind und selbst bei einer Betrachtung von lediglich einer bestimmten Fahrzeugkategorie beispielsweise der Kategorie Nutzfahrzeuge, von Fahrzeugtyp zu Fahrzeugtyp keine einheitliche Zuordnung zu den übrigen Fahrzeuginstrumenten gegeben ist. Hinzu kommt eine subjektive Wertung dahingehend, ob eine Funktion oder ein Betriebszustand überhaupt angezeigt werden soll und wenn ja, in welcher Weise, das heißt, ob die Anzeige gegebenenfalls mit einer Signalwirkung ausgestattet, also größer ausgebildet oder farblich hervorgehoben werden soll. Eine derartige beliebige Anbringung der Anzeigeelemente verhindert einerseits eine systematische Gestaltung des Armaturenbrettes andererseits dessen wirtschaftliche Herstellung.

Eine Anzeigevorrichtung mit den Merkmalen des Oberbegriffs des 1. Anspruchs ist bekannt aus EP-A-505 221

Die der vorliegenden Erfindung zugrunde liegende Aufgabe bestand somit darin, die Anzeige von Funktionen- und Betriebszuständen eines Kraftfahrzeuges zu vereinheitlichen, vorzugsweise eine systemfähige Lösung zu schaffen, die die Serienfertigungsfähigkeit von Armaturenbrettern verbessert.

Die Lösung der Aufgabe beschreibt der Anspruch 1. Vorteilhafte Ausbildungen der Erfindung sind in den Unteransprüchen wiedergegeben.

Der entscheidende Gedanke der erfindungsgemäßen Lösung besteht in der Zusammenfassung von Anzeigeelementen zu einer vorfertigbaren Baugruppe. Diese bietet den Vorteil einer schnelleren und genaueren Wahrnehmung der Anzeigen insbesondere wenn die Baugruppe im zentralen Sichtbereich des Fahrers angeordnet wird. Ein weiterer Vorteil der Erfindung ist darin zu sehen, daß die Anzeige-Baugruppe als Einbauaggregat mit anderen Einbaugeräten kombiniert werden kann, mit anderen Worten, auf relativ einfache Weise in einem Fahrerinformationssystem integrierbar ist.

Die konstruktive Gestaltung der Baugruppe ermöglicht einerseits eine kostenminimierte Herstellung andererseits liefert sie die Voraussetzungen, die Anzeigeelemente bezüglich Größe und Lage innerhalb der Anzeigevorrichtung auf einfache Weise zu variieren, wobei vorzugsweise den dem einfachen Rastermaß entsprechenden Lichtschächten dem doppelten Rastermaß entsprechende Lichtschächte in Hoch- oder Querformat zugeordnet werden. Dabei sind als Bauteile zur Bildung der Lichtschächte bei der bevorzugten Ausführungsform nämlich einer zweizeiligen Anzeigevorrichtung außer dem Rahmen lediglich zwei Arten von gleichgestalteten Wandelementen vorgesehen, die zusammen mit dem Rahmen sozusagen ein Stecksystem bilden. Besonders vorteilhaft für die erwähnte Variierbarkeit ist die Kombination von ebenen Wandelementen mit solchen die T-förmig profiliert sind. Im übrigen sind sämtliche Bauteile der Baugruppe durch geeignete Steck- und Rastverbindungen zusammenfügbar.

Der Vollständigkeit halber sei noch erwähnt, daß die vorzugsweise rechteckförmige Anzeigevorrichtung so gestaltet werden kann, daß ein Einbau in einem Armaturenbrett in Hoch- oder in Querformat vorgenommen werden kann.

Im folgenden sei die Erfindung anhand der beigefügten Zeichnungen näher erläutert. Es zeigen:
Fig. 1 eine Übersichtsdarstellung bezüglich der Zuordnung der erfindungsgemäßen Anzeigevorrichtung zu den übrigen Geräten eines Armaturenbrettes,
Fig. 2 eine teilweise aufgeschnittene Draufsicht auf die Anzeigevorrichtung,
Fig. 3 einen Schnitt gemäß der Schnittlinie A in Fig. 2,

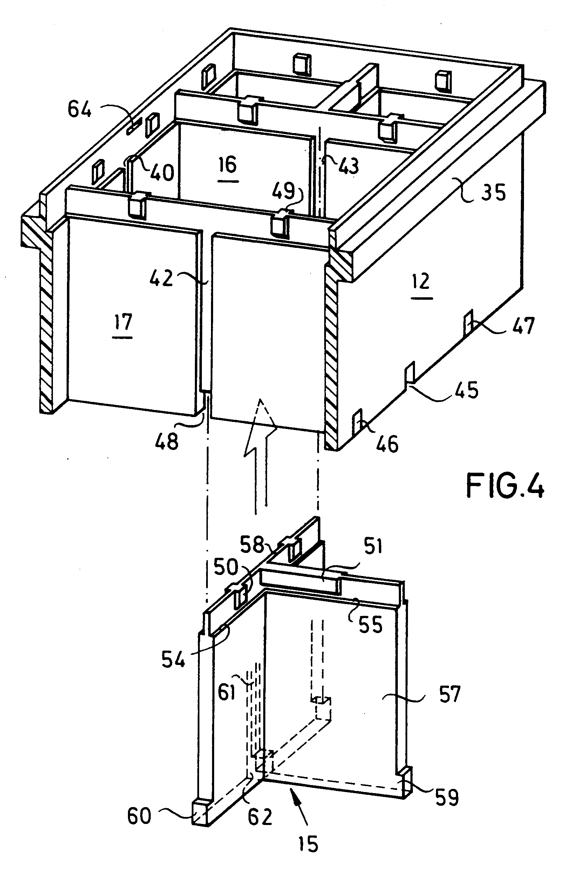

Fig. 4 eine perspektivische Darstellung des teilweise geschnittenen Rahmens der Anzeigevorrichtung mit einem ebenen Wandelement und einem T-profilierten Wandelement, die bereits in dem Rahmen eingesteckt sind sowie mit einem T-profilierten Wandelement, das dem Rahmen in einer Montageposition zugeordnet ist.

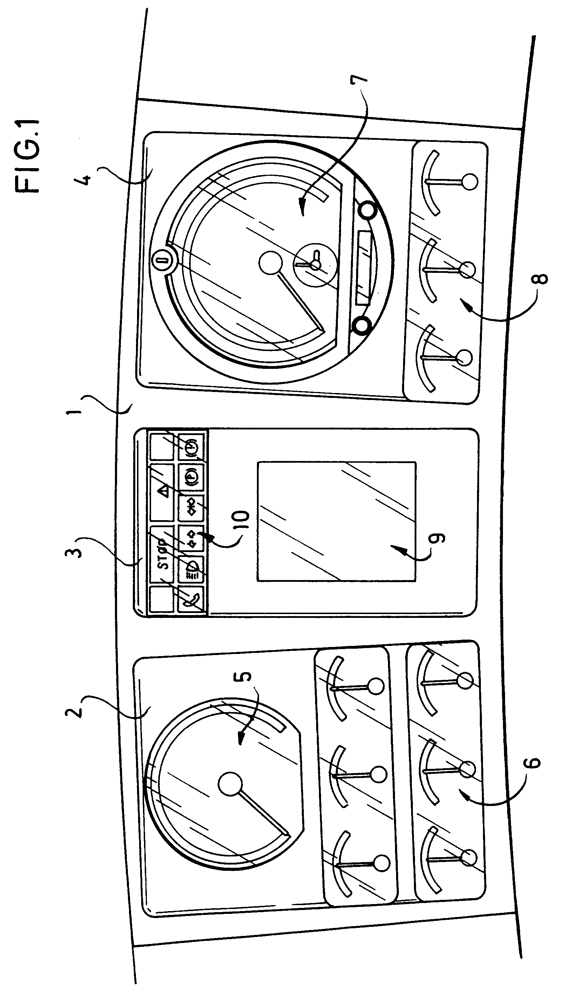

Die Übersichtsdarstellung Figur 1 zeigt die Umrisse eines Armaturenbretts 1, welches derart gestaltet ist, daß drei Instrumenten- bzw. Anzeigefelder 2, 3 und 4 optisch gegeneinander abgegrenzt sind. Dem Anzeigefeld 2 sind beispielsweise die Anzeigemittel 5 eines Drehzahlmessers und die Anzeigeelemente mehrerer verschiedene Betriebszustände des Fahrzeuges analog anzeigender Instrumente zugeordnet. Letztere sind mit 6 bezeichnet. Das Anzeigefeld 4 beinhaltet die Anzeigemittel eines Fahrtschreibers 7 und weitere analog anzeigenden Instrumenten zugeordnete Anzeigeelemente 8 während in dem zentralen Anzeigefeld 3 ein Display 9 und die erfindungsgemäße Anzeigevorrichtung 10 vorgesehen sind.

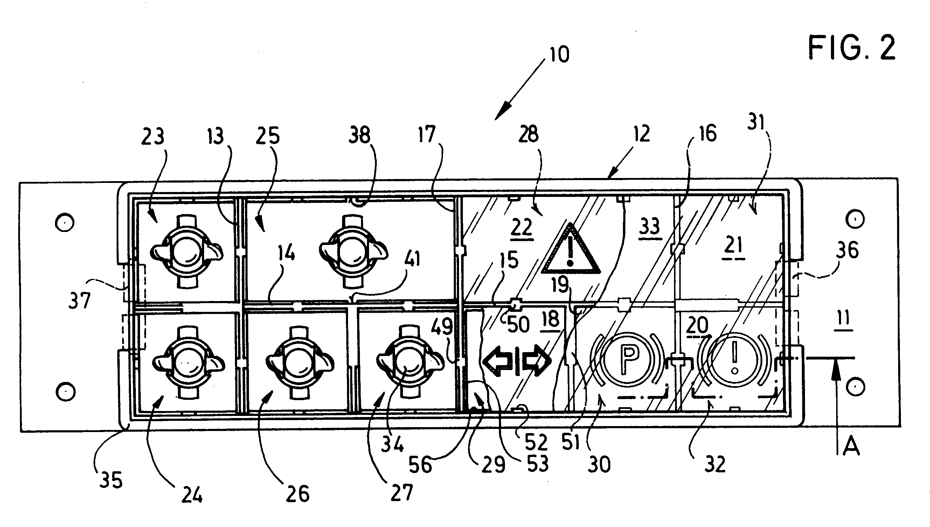

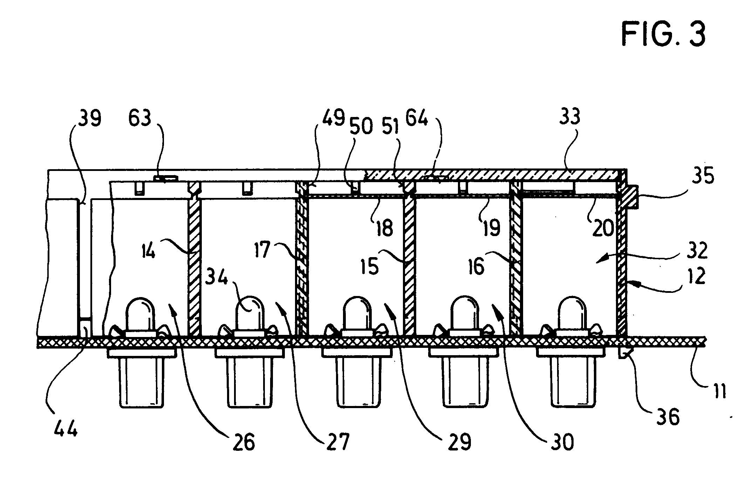

Wie aus den Figuren 2 und 3 hervorgeht besteht die Anzeigevorrichtung 10 aus einer Leiterplatte 11, einem Rahmen 12, mehreren Wandelementen, die der Aufteilung des von dem Rahmen 12 umschlossenen Raumes in Lichtschächte dienen und von denen im dargestellten Ausführungsbeispiel vier gleichgestaltete T-profilierte Wandelemente 13, 14, 15 und 16 sowie ein ebenes Wandelement 17 Anwendung finden, mehreren durchscheinenden Blenden - in Figur 1 sind fünf 18, 19, 20, 21 und 22 dargestellt -, welche nicht näher bezeichnete Symbole tragen oder neutral gestaltet sind und die Lichtschächte 23, 24, 25, 26, 27, 28, 29, 30, 31 und 32 frontseitig abdecken, einer Frontscheibe 33 und auf der Leiterplatte 11 befestigte, den Lichtschächten 23 bis 32 zugeordneten Lampen, von denen eine mit 34 bezeichnet ist.

Der Rahmen 12, an dem ein umlaufender Bund 35 angeformt ist, der der Versteifung des Rahmens sowie als Einbauanschlag dient, ist mittels an ihm ausgebildeter Klinken 36 und 37 mit der Leiterplatte 11 verbunden. Letztere ist in geeigneter Weise mit den Lampen 34 zugeordneten Ansteuerstromkreisen kontaktiert was, da nicht erfindungswesentlich, der Einfachheit halber nicht dargestellt ist. Die Klinken 36 und 37 sind derart geteilt ausgebildet, daß sie zwei unabhängig voneinander federungsfähige Arme aufweisen.

Die Wandelemente 13, 14, 15, 16, 17 können, wie aus den Figuren insbesondere jedoch aus der Figur 3 ersichtlich ist, miteinander und mit dem Rahmen 12 durch Führungsnute zusammengefügt werden. Dabei sind die Führungsnute am Rahmen 12 im Raster der Lichtschächte 23 bis 32 angebracht. Eine nichtbenutzte Führungsnut ist in Figur 1 mit 38 bezeichnet. Die Figur 2 zeigt eine weitere Führungsnut 39, die zusammen mit zwei anderen der Aufnahme des Wandelementes 13 dient. Eine ebenfalls nichtbenutzte Führungsnut 40 zeigt die Figur 3. Die an den dargestellten Wandelementen sichtbaren Führungsnute sind in Figur 1 mit 41 und in Figur 3 mit 42 und 43 bezeichnet. Das heißt die ebenen Wandelemente 17 sind beiderseits und mittig mit Führungsnuten versehen; die T-förmig profilierten Wandelemente weisen eine dem Querschenkel gegenüberliegende Führungsnut auf. Für das Zusammenfügen von Rahmen 12 und Wandelementen 13, 14, 15, 16 und 17 ist es zweckmäßig, daß in Fügerichtung ein Anschlag vorgesehen ist, das heißt, daß nur eine Fügerichtung möglich ist. Demzufolge sind in dem Rahmen 12 quer zu den Führungsnuten 38, 39, 40 und der Breite der Führungsnuten 38, 39, 40 entsprechende Ausschnitte vorgesehen, denen an den Wandelementen 13, 14, 15, 16 und 17 stirnseitig - gemeint sind in Lichtschachtrichtung verlaufende Stirnseiten - ausgebildete Finger zugeordnet sind. In Figur 2 ist einer der im Rahmen 12 angebrachten Ausschnitte mit 44 bezeichnet. Die Figur 3 zeigt einen nicht bzw. noch nicht belegten Ausschnitt 45 sowie zwei durch an den Wandelementen 16 und 17 angeformte Finger 46 und 47 belegte, nicht bezeichnete Ausschnitte. Ebenso sind auch die Wandelemente 13, 14, 15, 16 und 17 mit den Führungsnuten 38 bis 43 zugeordneten und deren Breite entsprechenden Ausschnitten, von denen in Figur 3 einer sichtbar und mit 48 bezeichnet ist, versehen. Die Anordnung der Ausschnitte am Rahmen 12 sowie an den Wandelementen in bezug auf die am Rahmen 12 ausgebildeten Klinken 36 und 37 ermöglicht es, die Wandelemente 13, 14, 15, 16, 17 in den Rahmen 12 einzustecken und durch Zusammenfügen des Rahmens 12 und der Leiterplatte 11 die Wandelemente 13, 14, 15, 16, 17 mittelbar zu befestigen.

Die Befestigung der Blenden 18 bis 22 sowie der nicht dargestellten Blenden erfolgt mittels Rastmittel. Diese bestehen darin, daß an jeder einen Lichtschacht bildenden, nicht näher bezeichneten Wandpartie des Rahmens 12 und an jedem der Wandelemente eine Stufe ausgebildet ist, und zwar mit einer nach außen weisenden Stirnfläche und daß dieser Stirnfläche eine Rastnase zugeordnet ist. Der Übersichtlichkeit halber seien im folgenden, stellvertretend für die Rastmittel sämtlicher Lichtschächte 23 bis 32, diejenigen des Lichtschachtes 29 näher betrachtet und bezeichnet. Das heißt, es sind vier Rastnasen 49, 50, 51 und 52 vorgesehen, die den Stirnflächen 53, 54, 55 und 56 zugeordnet sind. Eine der Rastnasen nämlich die am Querschenkel 57 des Wandelementes 15, ist bis zur Längswand 58 des Wandelementes 15 verlängert und dient somit zusammen mit der ihr gegenüberliegend ausgebildeten, nicht bezeichneten Rastnase zusätzlich als Versteifung. Diese Ausbildung liegt bei sämtlichen T-förmig profilierten Wandelementen 13, 14, 15 und 16 vor. Die den Lichtschacht 29 nach außen abdeckende, in gewissen Grenzen elastische, beispielsweise aus einer geeigneten Folie hergestellte Blende 18 läßt sich bei ihrer Montage zwischen die Rastnasen 49, 50, 51, 52 und die Stirnflächen 53, 54, 55, 56 einschnappen.

Der Vollständigkeit halber sei noch erwähnt, daß der an dem Querschenkel 57 ausgebildete und mit 59 bezeichnete Finger nach dem Einstecken des Wandelementes 15 in den Rahmen 12 in den Ausschnitt 45 in Rahmen 12 eingreift, während der an der Längswand 58 des Wandelementes 15 angeformte Finger 60 in den am Wandelement 17 vorgesehenen Ausschnitt 48 teilweise eingreift. Mit 61 und 62 ist eine am Wandelement 15 ausgebildete Führungsnut und ein dieser zugeordneter Ausschnitt bezeichnet. Mit 63 und 64 sind zwei von mehreren im Rahmen 12 vorgesehenen Einschnitten bezeichnet, die dem Einrasten von geeigneten, an der Frontscheibe 33 angeformten Zungen dienen.

## Patentansprüche

1. Anzeigevorrichtung für Funktionen und Betriebszustände eines Kraftfahrzeuges mit den anzuzeigenden Funktionen und Betriebszuständen zugeordneten Lampen, wobei die Anzeigevorrichtung aus mehreren miteinander verbundenen und den Lampen (34) zugeordneten, von einem Rahmen (12) umgebenen Lichtschächten (23, 24, 25, 26, 27, 28, 29, 30, 31, 32) aufgebaut ist, deren frontseitige Öffnungen jeweils von einer durchscheinenden, ein Symbol oder eine wörtliche Bezeichnung tragenden oder neutral gestalteten Blende (18, 19, 20, 21, 22) abgedeckt sind und deren gemeinsame Rückwand von einer die Lampen (34) tragenden und diese kontaktierenden Leiterplatte (11) gebildet wird,
**dadurch gekennzeichnet**
daß der Rahmen jeweils einen Teil der Wandung eines Lichtschachtes bildet,
daß zur Bildung der Lichtschächte (23 bis 32) innerhalb des Rahmens (12) lose, mit dem Rahmen (12) verbindbare Wandelemente (13, 14, 15, 16, 17) vorgesehen sind und
daß der Rahmen (12) an der Leiterplatte (11) unter Verwendung von Rastmitteln (36, 37) befestigt ist.

2. Anzeigevorrichtung nach Anspruch 1,
**dadurch gekennzeichnet,**
daß an dem Rahmen (12) und an den Wandelementen (13, 14, 15, 16, 17) Rastmittel zum Befestigen der den Lichtschächten (23 bis 32) zugeordneten Blenden (18, 19, 20, 21, 22) ausgebildet sind.

3. Anzeigevorrichtung nach Anspruch 1,
**dadurch gekennzeichnet,**
daß an jeder einen Lichtschacht (23 bis 32) bildenden Wandpartie eines Wandelementes (13, 14, 15, 16, 17) bzw. des Rahmens (12) eine Stufe ausgebildet ist und
daß der Stirnfläche (53, 54, 55, 56) der Stufe gegenüberliegend eine Rastnase (49, 50, 51, 52) angeformt ist.

4. Anzeigevorrichtung nach Anspruch 1,
**dadurch gekennzeichnet,**
daß im Raster der Lichtschächte (23 bis 32) innerhalb des Rahmens (12), den Wandelementen (13, 14, 15, 16, 17) zugeordnete Führungsnute (38, 39, 40) ausgeformt sind.

5. Anzeigevorrichtung nach Anspruch 1,
**dadurch gekennzeichnet,**
daß zur Bildung von zwei Anzeigezeilen der Länge des doppelten Rastermaßes entsprechende, ebene Wandelemente (17) vorgesehen sind, die beidseitig und mittig mit einer in Lichtschachtrichtung verlaufenden Führungsnut (42) versehen sind.

6. Anzeigevorrichtung nach Anspruch 5,
**dadurch gekennzeichnet,**
daß weitere Wandelemente (13, 14, 15, 16) vorgesehen sind, die in Lichtschachtrichtung T-förmig profiliert sind.

7. Anzeigevorrichtung nach Anspruch 6,
**dadurch gekennzeichnet,**
daß wenigstens die den Blenden (z. B. 18, 19, 20, 21, 22) zugeordneten Rastnasen (52) des Rahmens (12) der Frontscheibe (33) als Auflage dienen.

8. Anzeigevorrichtung nach einem oder mehreren vorangegangenen Ansprüchen,
**dadurch gekennzeichnet,**
daß im Rahmen (12) und in den Wandelementen (13, 14, 15, 16, 17) quer zu den Führungsnuten (38, 39, 40 und 41, 42, 43, 61) der Breite der Führungsnute (38, 39, 40 und 41, 42, 43, 61) entsprechende Ausschnitte (44, 45, 48, 62) ausgebildet sind und
daß an den den Führungsnuten (38, 39, 40 und 41, 42, 43, 62) zugeordneten Stirnseiten der Wandelemente (13, 14, 15, 16, 17) den Ausschnitten (44, 45, 48, 62) entsprechende Finger (46, 47, 59, 60) angeformt sind.

## Claims

1. Indicating device for indicating functions and operating states of a motor vehicle having lamps assigned to the functions and operating states to be indicated, the indicating device being composed of a plurality of light compartments (23, 24, 25, 26, 27, 28, 29, 30, 31, 32) which are connected to one another, assigned to the lamps (34) and surrounded by a frame (12), and the front-side openings of which are each covered by a translucent cover (18, 19, 20, 21, 22) bearing a symbol or designation in words or being of neutral design and the common rear wall of which is formed by a printed circuit board (11) bearing the lamps (34) and contacting the latter,
**characterized**
in that the frame in each case forms a part of the wall of a light compartment,
in that loose wall elements (13, 14, 15, 16, 17) connectable to the frame (12) are provided to form the light compartments (23 to 32) within the frame (12) and in that the frame (12) is fastened to the printed circuit board (11) by using latching means (36, 37).

2. Indicating device according to Claim 1,
**characterized**
in that latching means for fastening the covers (18, 19, 20, 21, 22) assigned to the light compartments (23 to 32) are constructed on the frame (12) and on the wall elements (13, 14, 15, 16, 17).

3. Indicating device according to Claim 1,
**characterized**
in that a step is constructed on each wall part, forming a light compartment (23 to 32), of a wall element (13, 14, 15, 16, 17) and of the frame (12) and
in that a latching lug (49, 50, 51, 52) is integrally formed opposite the end face (53, 54, 55, 56) of the step.

4. Indicating device according to Claim 1,
**characterized**
in that guiding grooves (38, 39, 40) assigned to the wall elements (13, 14, 15, 16, 17) are formed in line with the grid of the light compartments (23 to 32) within the frame (12).

5. Indicating device according to Claim 1,
**characterized**
in that plane wall elements (17), corresponding to the length of twice the grid dimension and provided on both sides and at the centre with a guiding groove (42) running in the direction of the light compartment, are provided to form two indicating lines.

6. Indicating device according to Claim 5,
**characterized**
in that further wall elements (13, 14, 15, 16), which are profiled in the shape of a T in the direction of the light compartment, are provided.

7. Indicating device according to Claim 6,
**characterized**
in that at least the latching lugs (52), assigned to the covers (e.g. 18, 19, 20, 21, 22), of the frame (12) serve as a support for the front panel (33).

8. Indicating device according to one or more of the preceding claims,
**characterized**
in that cutouts (44, 45, 48, 62) corresponding to the width of the guiding grooves (38, 39, 40 and 41, 42, 43, 61) are constructed in the frame (12) and in the wall elements (13, 14, 15, 16, 17) transversely to the guiding grooves (38, 39, 40 and 41, 42, 43, 61) and
in that fingers (46, 47, 59, 60) corresponding to the cutouts (44, 45, 48, 62) are integrally formed on the end faces, assigned to the guiding grooves (38, 39, 40 and 41, 42, 43, 62), of the wall elements (13, 14, 15, 16, 17).

## Revendications

1. Dispositif d'affichage pour des fonctions et états de fonctionnement d'un véhicule automobile avec des lampes associées à ces fonctions et états de fonctionnement, ledit dispositif d'affichage étant composé de plusieurs puits de lumière (23, 24, 25, 26, 27, 28, 29, 30, 31, 32) reliés les uns aux autres et associés auxdites lampes (34), entourés d'un cadre (12), les ouvertures frontales desdits puits de lumière étant respectivement recouvertes par un cache translucide (18, 19, 20, 21, 22) portant soit un symbole soit une désignation alphanumérique ou étant de configuration neutre et dont la paroi arrière commune est constituée par une platine à circuits imprimés (11) portant lesdites lampes (34) et mettant ces dernières en contact,
caractérisé par le fait
que le cadre forme respectivement une partie de la paroi d'un puits de lumière,
que pour la formation desdits puits de lumière (23 à 32) à l'intérieur du cadre (12) sont prévus, des éléments de paroi détachés (13, 14, 15, 16, 17) pouvant être assemblés avec ledit cadre (12) et
que ledit cadre (12) est fixé sur la platine à circuits imprimés (11) par l'intermédiaire de moyens à encliquetage (36, 37).

2. Dispositif d'affichage selon la revendication 1,
caractérisé par le fait
que sur le cadre (12) et sur les éléments de paroi (13, 14, 15, 16, 17) sont formés des moyens à encliquetage pour la fixation des caches (18, 19, 20, 21, 22) associés aux puits de lumière (23 à 32).

3. Dispositif d'affichage selon la revendication 1,
caractérisé par le fait
qu'à chaque partie de paroi formant un puits de lumière (23 à 32) d'un élément de paroi (13, 14, 15, 16, 17) ou d'un cadre (12) est formé un gradin et
que sur la face frontale (53, 54, 55, 56) située à l'opposé dudit gradin est formé un taquet d'arrêt (49, 50, 51, 52).

4. Dispositif d'affichage selon la revendication 1,
caractérisé par le fait
que dans la grille des puits de lumière (23 à 32) sont formées, à l'intérieur du cadre (12), des rainures de guidage (38, 39, 40) associées aux éléments de paroi (13, 14, 15, 16, 17).

5. Dispositif d'affichage selon la revendication 1,
caractérisé par le fait
que pour la formation de respectivement deux lignes d'affichage sont prévus des éléments de paroi plans (17) correspondant à la longueur du double pas de la grille qui sont dotés, de part et d'autre et au centre, d'une rainure de guidage (42) s'étendant dans le sens du puits de lumière.

6. Dispositif d'affichage selon la revendication 5,
caractérisé par le fait
qu'il est prévu d'autres éléments de paroi (13, 14, 15, 16) portant un profil T dans le sens du puits de lumière.

7. Dispositif d'affichage selon la revendication 6,
caractérisé par le fait
qu'au moins les taquets d'arrêt (52) du cadre (12) associés aux caches (par exemple 18, 19, 20, 21, 22) servent de support à la vitre frontale (33).

8. Dispositif d'affichage selon l'une ou plusieurs quelconques des revendications précédentes
caractérisé par le fait
que dans le cadre (12) et dans les éléments de paroi (13, 14, 15, 16, 17) sont formées, transversalement aux rainures de guidage (38, 39, 40 et 41, 42, 43, 61), des découpures (44, 45, 48, 62) correspondant à la largeur desdites rainures de guidage (38, 39, 40 et 41, 42, 43, 61) et
que sur les faces frontales des éléments de paroi (13, 14, 15, 16, 17) associées auxdites rainures de guidage (38, 39, 40 et 41, 42, 43, 61) sont formés des taquets (46, 47, 59, 60) correspondant auxdites découpures (44, 45, 48, 62).
